(19) Europäisches Patentamt
European Patent Office
Office européen des brevets

(11) Numéro de publication: **0 360 649**
**A1**

(12) **DEMANDE DE BREVET EUROPEEN**

(21) Numéro de dépôt: **89402390.2**

(22) Date de dépôt: **01.09.89**

(51) Int. Cl.⁵: **C 01 G 23/00**
C 01 G 25/00, C 01 G 27/00,
C 04 B 35/00

(30) Priorité: **02.09.88 FR 8811498**

(43) Date de publication de la demande:
**28.03.90 Bulletin 90/13**

(84) Etats contractants désignés: **AT DE FR GB NL**

(71) Demandeur: **COMPAGNIE EUROPEENNE DE COMPOSANTS ELECTRONIQUES LCC**
**50, rue Jean -Pierre Timbaud B.P. 301**
**F-92402 Courbevoie (FR)**

(72) Inventeur: **Chaput, Frédéric**
**Thompson- CSF SCPI Cedex 67**
**F-92045 Paris La Defense (FR)**

**Boilot, Jean-Pierre**
**Thompson- CSF SCPI Cedex 67**
**F-92045 Paris La Defense (FR)**

(74) Mandataire: **Guérin, Michel et al**
**THOMSON-CSF SCPI**
**F-92045 PARIS LA DEFENSE CEDEX 67 (FR)**

(54) **Procédé de fabrication de matériau céramique par voie chimique hybride et matériau obtenu.**

(57) L'invention a pour objet la fabrication par voie chimique de matériau céramique appartenant au système :
$Ba_x\ Sr_{1-x}\ (Ti_uZr_vHf_w)O_3$.

Le procédé de fabrication comprend les étapes suivantes :
- préparation d'une solution alcoolique contenant au moins un alcoolate de titane, de zirconium ou d'hafnium,
- préparation d'une quantité déterminée d'hydroxyde hydraté de baryum et/ou d'hydroxyde hydraté de strontium à l'état solide,
- sous agitation violente, dissolution de l'hydroxyde ou des hydroxydes dans la solution alcoolique et déroulement de la réaction jusqu'à obtention d'une pâte,
- séchage de la pâte obtenue.

EP 0 360 649 A1

## Description

# PROCEDE DE FABRICATION DE MATERIAU CERAMIQUE PAR VOIE CHIMIQUE HYBRIDE ET MATERIAU OBTENU

La présente invention concerne un nouveau procédé de fabrication de matériaux céramiques, principalement à structure pérovskite, par voie chimique hybride, en utilisant un mélange de précurseurs minéraux et de précurseurs organiques.

Pour définir ce qu'est une céramique, on peut se rapporter à l'article de J-M HAUSSONNE paru dans les Techniques de l'Ingénieur, E 1820, p. 3 (mars 1986).

La définition en est la suivante :

"une céramique est un matériau inorganique polycristallin, présentant une microstructure complexe de grains et de joints de grains. Cette structure est définie lors du cycle d'élaboration, qui transforme des matières premières le plus souvent pulvérulentes en un matériau dense, idéalement exempt de pores, et dont les propriétés tiennent de celles de ses grains, mais aussi de son hétérogénéité. La phase technologique clé de l'élaboration d'une céramique est son frittage, qui est le cycle température-atmosphère-temps au cours duquel les grains initialement mis au contact les uns avec les autres par des opérations de mise en forme se lient à la suite de l'action de divers mécanismes de transport pour ensuite acquérir la microstructure recherchée".

On sait que dans le domaine des céramiques techniques, utilisées notamment en électronique, un intérêt tout particulier est accordé au développement de poudres issues de voies chimiques. Celles-ci présentent des avantages certains sur les poudres obtenues par réaction à l'état solide : homogénéité et pureté accrues, contrôle aisé de la stoechiométrie, réactivité élevée augmentant les cinétiques de réaction et diminuant les températures de frittage (suppression des broyages longs et polluants), obtention d'une distribution granulométrique étroite permettant de contrôler la croissance des grains. Cependant, hormis les inconvénients spécifiques à ces méthodes : nombre important d'étapes, chimie très complexe pour la formation des précurseurs, cycle de calcination délicat (il implique parfois la diminution de la surface spécifique de façon sensible conduisant à des grains assez lisses qui frittent souvent difficilement), présence d'agglomérats plus ou moins solides (suivant les techniques de séchage ou de lavage de la poudre), il en est un qui concerne le coût relativement élevé de ces techniques de préparation.

Dans le domaine des condensateurs, les tendances actuelles s'orientent depuis près d'une dizaine d'années vers l'élaboration de condensateurs céramiques possédant de fortes capacités volumiques (leur développement étant étroitement lié à celui de la microélectronique) et vers la réduction du coût de ce type de composant.

Une solution envisagée consiste à utiliser des matériaux diélectriques, généralement à base de titanate de baryum, issus de voies chimiques, présentant des propriétés diélectriques améliorées (en particulier augmentation de la constante diélectrique du fait de la pureté des précurseurs et de la possibilité de centrage de la répartition en taille à une valeur optimale) et frittant à plus basse température. Cependant le prix de revient souvent élevé des poudres issues des méthodes chimiques n'a toujours pas permis le développement industriel.

Dans le domaine des applications haute fréquence (micro-ondes), on réalise des résonateurs diélectriques qui doivent présenter une constante diélectrique supérieure à 30, de faibles pertes (facteur de qualité supérieur à 10 000) et un coefficient en température de la fréquence de résonance de quelques ppm/°C. Ces conditions d'utilisation nécessitent très souvent la réalisation de compositions diélectriques complexes à structure pérovskite. Les méthodes chimiques sont probablement indispensables pour obtenir l'homogénéité parfaite de ces céramiques.

On sait par ailleurs que les résistances à coefficient de température positif (thermistances CTP) sont réalisées à partir de titanate de baryum et que l'amplitude du saut de résistivité est améliorée par l'utilisation de matériaux de base plus purs et par une répartition homogène des différents dopants. Le prix de base de ces composants ne permet pas actuellement d'utiliser les titanates de baryum préparés par voie liquide en raison de leur prix trop élevé.

L'utilisation des techniques de "chimie douce" pour la fabrication de matériaux à structure pérovskite n'est pas une idée nouvelle et plusieurs procédés sont connus. On connaît la technique de coprécipitation : en particulier, la formation d'oxalates ou de citrates doubles de baryum et de titane par précipitation de solutions aqueuses Ti-Ba par addition d'acide oxalique ou citrique. Cette technique est décrite dans l'article suivant : W.S. Clabaugh, E.M. Swiggard and R. Gilchrist, "Preparation of barium titanyl oxalate tetrahydrate for conversion to barium titanate of high purity", J. Research N.B.S. 56, 5, 289 (1956) et dans le brevet US 3 231 328. Cette technique présente plusieurs inconvénients :

i- Les opérations de filtration et de lavage du précipité ainsi que la précipitation parasite de $TiO_2$ rendent difficile le contrôle de la stoechiométrie.

ii- Une étape de calcination est nécessaire pour décomposer le sel double.

iii- La décomposition du sel double ne conduit pas directement à $BaTiO_3$, du fait de la formation d'intermédiaires carbonatés lors de la combustion des ions oxalates ou citrates. En conséquence, la température de frittage reste élevée (1350°C).

iv- L'élaboration de compositions complexes par précipitation contrôlée d'un grand nombre

d'éléments est difficile.

On connaît également la technique sol-gel, notamment par le brevet US 3 647 364. Il s'agit de réaliser un gel amorphe par hydrolyse-condensation d'un mélange d'alcoxydes de baryum et de titane en solution alcoolique. Par exemple, l'isopropoxyde de baryum $Ba(C_3H_7O)_2$ et le butoxyde de titane $Ti(C_4H_9O)_4$ sont hydrolysés par un excès d'eau. Le gel amorphe cristallise à basse température (500° C) en particules très fines (5-10nm). Les inconvénients de cette technique sont les suivants :

i- La poudre ultrafine de grande surface spécifique (50-70 $m^2/g$) forme facilement des agglomérats et sa mise en forme nécessite une calcination préalable.

ii- La très grande réactivité à l'air des alcoxydes de baryum (hydrolyse) et du gel amorphe (carbonatation) nécessite une mise en oeuvre en atmosphère inerte.

On connaît encore une technique utilisant de l'hydroxyde de baryum (voir notamment US 3 292 994). La préparation de titanate de baryum cristallisé par addition d'un alcoxyde de titane (par exemple $Ti(O^iPr)_4$) à une solution aqueuse d'un sel de baryum, à un pH compris entre 11 et 14 a été reportée par S.S. Flashen (J.Am.Chem. Soc. 77(1955)6194).

Les réactions principales qui interviennent au cours du procédé sont :

$Ti(OR)_4 + Ba^{2+} + 2OH^- + 4HO_2 \rightarrow Ti(OH)_6^{2-} + Ba^{2+} + 4ROH$ [1]

$Ti(OH)_6^{2-} + Ba^{2+} \rightarrow Ba\ Ti\ O_3\ + 3H_2\ O$ [2]

En suivant la procédure décrite par Flashen des particules de $BaTiO_3$ de taille 1-5 µm sont obtenues. Le problème de ce procédé est la difficulté de réaliser complètement les réactions. En effet, la formation de $BaTiO_3$ conduit à une diminution progressive de la concentration des éléments Ba et Ti dans la solution et à une chute de pH. En conséquence, les cinétiques de réaction diminuent progressivement, les réactions 1 et 2 ne sont pas totales et la stoechiométrie Ba/Ti est inférieure à 1 et non reproductible. Plusieurs modifications ont été proposées par améliorer ce procédé :

- Utilisation d'un excès de baryum. La poudre est alors très sensible à la carbonatation.
- Synthèse hydrothermale (voir en particulier DE 3 526 674). Dans les conditions 120°-300° C et 0,5-5 MPa, des poudres de $BaTiO_3$, $SrTiO_3$ et $PbTiO_3$ ont été préparés. Outre la complexité du procédé, les réactions ne semblent pas complètes et la stoechiométrie n'est pas contrôlable.

Pour pallier ces inconvénients, l'invention propose un procédé de fabrication simple, sans utilisation d'atmosphère inerte, donnant dans un grand domaine de compositions, des poudres céramiques cristallisées après séchage et de stoechiométrie contrôlable. La surface spécifique de 10 à 20 $m^2/g$ rend possible la mise en forme directe, sans calcination préalable. Les poudres sont frittables à basse température (1150° C pour $BaTiO_3$). La simplicité de l'appareillage utilisé, ainsi que le faible coût des matières premières, peut assurer à cette technique un développement industriel aisé. Le procédé dérive de la technique proposée par Flashen pour la synthèse de $BaTiO_3$. Il consiste à utiliser un hydroxyde alcalino-terreux (Ba - Sr) hydraté à l'état solide, à le dissoudre dans un milieu alcoolique contenant des alcoxydes. La dissolution est rapidement suivie par les réactions hydrolyse - condensation des alcoxydes par l'eau d'hydratation de l'hydroxyde initial et le mélange liquide évolue progressivement vers une pâte homogène. La concentration élevée des éléments et des ions $OH^-$ dans le liquide ainsi que l'agitation violente maintenue pendant toute l'opération permet de réaliser des réactions complètes et d'obtenir une composition pérovskite cristallisée de stoechiométrie contrôlée.

L'invention a donc pour objet un procédé de fabrication par voie chimique de matériau céramique appartenant au système

$Ba_xSr_{1-x}(Ti_uZr_vHf_w)O_3$ [3]

avec $0 \leqq x \leqq 1$, les coefficients u, v et w pouvant être nuls mais au moins un ne l'étant pas, caractérisé en ce que le procédé comprend les étapes suivantes :

- préparation d'une solution alcoolique contenant au moins un alcoolate de titane, de zirconium ou d'hafnium,
- préparation d'une quantité déterminée d'hydroxyde hydraté de baryum et/ou d'hydroxyde hydraté de strontium à l'état solide,
- sous agitation violente, dissolution de l'hydroxyde ou des hydroxydes dans la solution alcoolique et déroulement de la réaction jusqu'à obtention d'une pâte,
- séchage de la pâte obtenue.

L'invention a aussi pour objet un matériau céramique obtenu par le procédé ci-dessus, caractérisé en ce que : $0,95 \leqq u + v + w \leqq 1,05$ .

L'invention sera mieux comprise et d'autres avantages apparaîtront à la lecture de la description qui va suivre, donnée à titre d'exemple non limitatif, et grâce aux dessins annexés parmi lesquels :

- la figure 1 est un diagramme représentant l'évolution de la température et de la pression régnant dans un autoclave en fonction du temps,
- la figure 2 représente un spectre de diffraction des rayons X,
- la figure 3 est un diagramme montrant des courbes de retrait en fonction de la température,
- les figures 4 à 11 sont des diagrammes illustrant les propriétés diélectriques de matériaux obtenus par le procédé selon l'invention.

L'invention trouve plus précisément son application dans la synthèse de poudres de matériaux céramiques appartenant au système $Ba_xSr_{1-x}(Ti_uZr_vHf_w)O_3$ dans lequel x est compris entre 0 et 1 et la somme u+v+w comprise entre 0,95 et 1,05.

Toujours selon l'invention, des substitutions peuvent être facilement réalisées (de façon homogène à l'échelle moléculaire) au cours de la synthèse des poudres. En particulier, les atomes de titane, zirconium et

hafnium peuvent être substitués partiellement ou totalement :

- Soit par un mélange d'élément M et M′ dans les proportions respectives 2/3 et 1/3. Par exemple, dans le cas d'une substitution totale des atomes de titane, $Ti_u$ est remplacé par $M_{2u/3}M'_{u/3}$ dans la formule 3 avec M qui représente au moins un métal choisi parmi le tantale et le niobium, et M′ qui représente au moins un métal choisi parmi le magnésium, le zinc et le manganèse. Parmi ces compositions, on citera en particulier $Ba(Ta_{2/3}Mg_{1/3})O_3$.

- Soit par un mélange d'éléments M et M″ dans les proportions respectives 3/4 et 1/4. Par exemple, dans le cas d'une substitution totale des atomes de titane, $Ti_u$ est remplacé par $M_{3u/4}M''_{u/4}$ dans la formule 3 avec M qui représente au moins un métal choisi parmi le tantale et le niobium, et M″ qui représente au moins un métal choisi parmi le lithium, le sodium et le potassium. Parmi ces compositions, on citera en particulier $Ba(Nb_{3/4}Li_{1/4})O_3$.

Toujours selon l'invention, des éléments dopants peuvent être facilement introduits (de façon homogène à l'échelle moléculaire) au cours de la synthèse des poudres. Ces dopants peuvent être choisis parmi le calcium $Ca^{II}$, le magnésium $Mg^{II}$, le zinc $Zn^{II}$, les ions des métaux de transition : niobium $Nb^{V}$, tantale $Ta^{V}$, cuivre $Cu^{II}$, manganèse $Mn^{II}$, cobalt $Co^{II}$, les ions alcalins, le lanthane $La^{III}$, l'yttrium $Y^{III}$, l'antimoine $Sb^{III}$, le plomb $Pb^{II}$. Après mise en forme et frittage, ces matériaux céramiques sont utilisables dans le domaine de l'électronique (condensateurs appartenant à différentes classes, thermistances...)

L'invention a l'avantage d'utiliser des précurseurs de départ dont la chimie est bien connue et qui sont utilisés dans d'autres industries que l'industrie des céramiques. Ces précurseurs sont disponibles à des coûts modestes.

Dans le système considéré ci-dessus, les éléments du sous-groupe du titane (titane, zirconium, hafnium) sont introduits par l'intermédiaire de précurseurs choisis parmi les alcoolates (ou alcoxydes) métalliques, par exemple : $Zr(OR)_4$, $Ti(OR)_4$ et $Hf(OR)_4$, R représentant un groupement alkyle pouvant contenir de 1 à 5 atomes de carbone). Les alcoolates (ou alcoxydes) utilisés comme produit de départ ainsi que leurs propriétés sont bien connus. Ils peuvent être préparés selon les méthodes générales décrites dans la littérature, par exemple dans l'article de D. C. BRADLEY "Metal alkoxides in Progress Inorg. Chem. 2, 1960, 303 - 361" . Parmi les matières premières utilisables comme produit de départ dans le procédé de l'invention on peut citer notamment :

$Zr(C_3H_7O)_4$ propylate de zirconium liquide
$Zr(C_4H_9O)_4$ butylate de zirconium liquide
$Ti(C_3H_7O)_4$ isopropylate de titane liquide
$Ti(C_4H_9O)_4$ butylate de titane liquide
$Hf(C_4H_9O)_4$ butylate d'hafnium liquide.

Le baryum et le strontium sont introduits sous forme d'hydroxydes hydratés $Ba(OH)_2,nH_2O$ et $Sr(OH)_2,nH_2O$ (de préférence n est égal à 8).

Si le matériau céramique doit comprendre un ou plusieurs substituants ou dopants, ceux-ci peuvent être introduits sous différentes formes. On peut les introduire sous forme d'alcoolates (ou alcoxydes) métalliques, par exemple $Nb(OR)_5$, $Ta(OR)_5$, LiOR, $Mg(OR)_2$, $Sb(OR)_5$, $La(OR)_3$ , etc. Dans le cas où ces produits se présentent sous forme solide, il convient d'utiliser un solvant, par exemple le méthanol, l'éthanol, le propanol et le butanol.

On peut également introduire ces dopants sous forme de sels métalliques (de préférence des nitrates) solubles dans les alcools.

Les réactions principales qui interviennent au cours de ce procédé sont, dans le cas particulier de la composition $BaTiO_3$, les suivantes :

$$Ti(OR)_4 + Ba^{2+} + 2OH^- + 4H_2O \rightarrow Ti(OH)_6^{2-} + Ba^{2+} + 4ROH \quad [1]$$

$$Ti(OH)_6^{2-} + Ba^{2+} \rightarrow BaTiO_3 + 3H_2O \quad [2]$$

Dans la réaction [1], le terme $4H_2O$ provient de l'hydroxyde hydraté $Ba(OH)_2, nH_2O$.

A un pH maintenu entre 11 et 14 en présence d'ions $OH^-$, 4 molécules d'eau et 2 groupes hydroxyls attaquent les atomes d'oxygène de $Ti(OR)_4$ par un processus nucléophile. Cette réaction est suivie d'un réarrangement électronique avec départ de 4 molécules d'eau. Il en résulte la formation d'anions $Ti(OH)_6^{2-}$ neutralisés par les ions $Ba^{2+}$ (réaction 1). L'interaction acido-basique est suivie par une stabilisation par condensation interne et départ d'eau (réaction 2).

Ces réactions sont valables dans le cas où $Ti^{IV}$ est remplacé par $Zr^{IV}$ ou $Hf^{IV}$ et ou $Ba^{II}$ est remplacé par $Sr^{II}$. Elles sont également valables dans le cas où ces éléments sont combinés dans le système $Ba_xSr_{1-x}(Ti_uZr_vHf_w)O_3$.

Mise en oeuvre du procédé.

Le procédé comprend une étape qui consiste à élaborer une solution alcoolique contenant le ou les alcoolates métalliques selon que l'on désire introduire du titane, du zirconium et/ou de l'hafnium. De préférence, la solution alcoolique comprendra également le ou les alcools correspondant aux alcoolates et dont les quantités volumiques peuvent dépasser la quantité du ou des alcoolates métalliques et des différents éléments substituants ou dopants introduits sous forme de sels solubles dans l'alcool ou sous forme d'alcoolates métalliques.

Une autre étape du procédé consiste à peser le ou les hydroxydes hydratés de baryum ou de strontium à l'état solide, dans des quantités correspondant à la formulation choisie.

Dans une étape suivante, sous agitation violente (par exemple :turbine centrifuge combinant l'action complexe des effets decisaillement, de battement, de percussion et des phénomènes de cavitation ultra-sonique), on incorpore la poudre composée du ou des hydroxydes de baryum ou de strontium dans la solution alcoolique. Après quelques minutes d'agitation énergique, le mélange de couleur blanche d'abord liquide et peu visqueux évolue progressivement vers une pâte homogène et visqueuse emprisonnant par là même les différents éléments introduits. Il est préférable de procéder à cette opération en portant le mélange à une température supérieure à la température ambiante mais qui reste cependant inférieure à la température d'évaporation des alcools et des précurseurs organiques. Ceci a pour effet d'accélérer la réaction et de la rendre plus complète. Le produit de réaction est ensuite séché. Différentes techniques de séchage peuvent être envisagées, parmi celles-ci :

- le séchage par convection (en étuve),
- le séchage par rayonnement (sous un épiradiateur ou par micro-ondes),
- le séchage hypercritique (en autoclave).

Concernant le séchage hypercritique, on peut faire les remarques suivantes.

L'évacuation du solvant dans les conditions hypercritiques permet de supprimer l'action néfaste des forces capillaires en éliminant l'interface liquide-gaz (M. A. VICARINI et al., Bull. Soc. Chim., 1969, n°5, p. 1466). La poudre préparée est finement divisée. D'autre part, l'action combinée de la pression et de la température autorise un accomplissement plus rapide et complet des différentes réactions (hydrolyse, condensation). Un drainage des espèces organiques est également assuré au cours du séchage proprement dit. La perte de masse après séchage est inférieure à 10 %.

En plus du récipient contenant le produit à sécher on introduit dans l'autoclave la quantité d'alcool nécessaire pour que la pression critique soit atteinte. L'appareil est fermé puis chauffé jusqu'à ce que la température critique $T_c$ des solvants soit légèrement dépassée. L'alcool est alors lentement évacué puis condensé sur un réfrigérant. Les courbes types représentant la température T et la pression P dans l'autoclave en fonction du temps t (en heures) pendant la durée d'une expérience sont représentées à la figure 1. Les solvants les plus couramment utilisés sont l'éthanol et l'isopropanol pour lesquels les conditions critiques sont respectivement 243°C - 6,51 MPa et 235°C - 4,85 MPa.

Pour les différentes techniques de séchage, un montage de récupération des alcools peut être utilisé. Après distillation ces alcools pourront être utilisés dans la préparation des précurseurs organiques (alcoolates organiques), par exemple à partir de chlorures métalliques $MCl_4$ (M représentant un métal choisi parmi le zirconium IV, le titane IV, l'hafnium IV) en accord avec la réaction suivante :

$$MCl_4 + 4\ ROH \longrightarrow M(OR)_4 + 4\ HCl\nearrow$$

R étant un radical organique.

La poudre obtenue après séchage est déjà nettement cristallisée et peut être directement mise en forme.

<u>Exemple 1</u>: titanate de baryum

Les réactifs de départ sont les suivants :

- 60,9356g d'isopropoxyde (ou isopropylate) de titane-liquide de densité 0,9550
- 63,8 $cm^3$ d'isopropanol
- 67,6305g d'hydroxyde de baryum (octahydraté) solide.

Les deux premiers constituants sont versés, à l'air libre, dans un bécher sec. L'hydroxyde est ensuite pesé dans une coupelle avant d'être incorporé au mélange alcoolique sous agitation énergique. Après environ une minute et demie de brassage, le mélange gélifie sous forme de mousse blanche. Le récipient est ensuite placé en étuve (séchage à 150°C) ou dans un autoclave de 600 $cm^3$ dans lequel, au préalable, on aura pris soin de mettre 118 $cm^3$ d'isopropanol (pour atteindre la pression critique). Après fermeture de l'autoclave, le système de chauffage est actionné. On monte à 260°C à raison de 8°C/mn. En fin d'expérience la pression atteinte est de 8,5 MPa. La pression est alors lentement relachée à température constante (260°C) ; les vapeurs sont condensées sur un réfrigérant de manière à recueillir l'isopropanol qui après distillation pourra être utilisé de nouveau.

Après refroidissement complet de l'autoclave (dès que la valeur de la pression est équivalente à celle de la pression atmosphérique) on peut sortir le récipient pour en extraire la poudre. Celle-ci est sous forme d'un ou plusieurs blocs blancs très friables qui pourront sans difficulté être finement divisés.

La poudre qui résulte de ces deux techniques de séchage (étuve et autoclave) possède une surface spécifique de l'ordre de 15 $m^2/g$. Après compaction (sous 2000 bars) les pastilles obtenues (densité de 45 % de densité théorique dans le premier cas et de 55 % de densité théorique dans le second) sont traitées thermiquement entre 1000°C et 1300°C.

La figure 2 présente le spectre de diffraction des rayons X obtenu à température ambiante (rayonnement $CuK\alpha$) de la poudre de titanate de baryum à la sortie de l'autoclave ou après séchage à 150°C en étuve. Sur le diagramme de la figure 2, l'axe des ordonnées représente l'intensité I diffractée d'un faisceau de rayons X incident sous un angle $\theta$ aux plans cristallins du matériau étudié. L'axe des abscisses est gradué en $2\theta$.Une élévation de la température conduit à un affinement des raies et à un dédoublement de certaines d'entre elles

qui caractérise la déformation tétragonale. Aucun intermédiaire de réaction n'est présent au cours de la montée en température (absence de $Ba_2TiO_4$). La figure 3 montre les courbes de retrait en $\frac{\Delta L}{L}$ en fonction de la température T pour les matériaux obtenus (la rampe de montée en température est de 3°C/mn).

Le tableau 1, placé en fin de description, regroupe quelques propriétés diélectriques pour différents échantillons de $BaTiO_3$ (Ba/Ti = 1) séchés en étuve à 150° C. La constante diélectrique ε a été mesurée à 20°C et pour une fréquence de 1 kHz. La tangente de l'angle de pertes tgδ (ou facteur de dissipation) a été mesurée sous les mêmes conditions. Les propriétés diélectriques sont données pour différentes températures de frittage (150° C/h, 2 heures de palier) et les mesures ont été effectuées sur des échantillons numérotés de I à IV et préparés sous la forme de condensateurs disques. Les figures 4 et 5 représentent l'évolution, en fonction de la température T, de la constante diélectrique ε et de la tangente de l'angle de pertes tg δ des échantillons I à IV.

Le tableau 2, placé en fin de description, regroupe quelques propriétés diélectriques pour différents échantillons de $BaTiO_3$ (Ba/Ti = 1) séchés en autoclave (séchage hypercritique : 260° C, 8,5 MPa). Comme précédemment, la constante diélectrique ε et la tangente de l'angle de pertes tg δ ont été mesurées à 20°C et sous 1 kHz. Les propriétés diélectriques sont données pour différentes températures de frittage (150° C/h, 2 heures de palier) et les mesures ont été effectuées sur des échantillons numérotés de V à VII et préparés sous la forme de condensateurs disques. Les figures 6 et 7 représentent l'évolution, en fonction de la température T, de la constante diélectrique ε et de la tangente de l'angle de pertes tg δ des échantillons V à VII.

Exemple 2 : Préparation de zirconate de strontium

Les réactifs de départ sont les suivants :

- 93,0864g de n-propoxyde (ou propylate) de zirconium (liquide de densité 1,05 et présentant une teneur en masse de 21,6 % de zirconium),
- 88,5 cm³ d'isopropanol
- 58,5787g d'hydroxyde de strontium (octahydraté).

Le mode opératoire est équivalent au précédent (lors de la préparation du titanate de baryum). Après environ 2 minutes de brassage le mélange gélifie sous forme d'une mousse jaune claire. La quantité d'alcool isopropylique ajouté pour atteindre la pression critique est de 58 cm³. Après fermeture de l'autoclave, le système de chauffage est programmé pour que la température atteinte soit de 275°C (8°C/mn). La pression est alors égale à 8,5 Mpa.

Exemple 3 : Préparation de titanate mixte baryum-strontium

Les réactifs de départ sont les suivants :

- 44,554g d'isopropoxyde (ou isopropylate) de titane (liquide de densité 0,9550)
- 46,5 cm³ d'isopropanol
- 39,5593g d'hydroxyde de baryum (octahydraté)
- 8,3311g d'hydroxyde de strontium (octahydraté).

Le mode opératoire est toujours équivalent au précédent. Au cours du mélange, on introduit un hydroxyde (baryum par exemple) puis l'autre. Le mélange intime (à l'échelle moléculaire) s'effectue lors de l'étape de brassage énergique.

Exemple 4 : Préparation de $BaTi_{0,76}Hf_{0,24}O_3$

les réactifs de départ sont les suivants :

- 16,3540g de butoxyde (ou butylate) d'hafnium (liquide de densité 1 et présentant une teneur en masse de 46,7% d'oxyde d'hafnium)
- 32,6610g d'isopropoxyde (ou isopropylate) de titane (liquide de densité 0,955)
- 49 cm3 d'isopropanol
- 47,6949g d'hydroxyde de baryum (octahydraté).

Le mode opératoire est équivalent à celui de l'exemple 1 (titanate de baryum).

Après environ 2 minutes de brassage le mélange gélifie sous forme d'une mousse blanche qui subit par la suite un séchage en étude à 150°C.

Le tableau 3, placé en fin de description, regroupe quelques propriétés diélectriques pour différents échantillons de $BaTi_{0,76}Hf_{0,24}O_3$ séchés en étuve à 150°C. La constante diélectrique ε a été mesurée à 20°C et pour une fréquence de 1 kHz. La tangente de l'angle de pertes tg δ a été mesurée sous les mêmes conditions. Les propriétés diélectriques sont données pour différentes températures de frittage (150° C/h, 2 heures de palier) et les mesures ont été effectuées sur des échantillons numérotés de VIII à X et préparés sous la forme de condensateurs disques. Les figures 8 et 9 représentent l'évolutation, en fonction de la température T, de la constante diélectrique ε et de la tangente de l'angle de perte tg δ des échantillons VIII à X.

Exemple 5 : Préparation d'une composition complexe $Ba_{0,884}Ca_{0,116}Ti_{0,824}Zr_{0,176}O_3$.

Les réactifs de départ sont les suivants :

- 45,4351 g d'isopropoxyde (ou isopropylate) de titane (liquide de densité 0,9550).
- 13,1971 g de butoxyde (ou butylate) de zirconium (liquide de densité 1,0650).
- 48 cm³ d'isopropanol.
- 13 cm³ de butanol.

- 5,4216 g de nitrate de calcium (tétrahydraté).
- 54, 1044 g d'hydroxyde de baryum (octahydraté).

La solution comprend, outre les différents alcoxydes (ou alcoolates) et les différents alcools, le nitrate de calcium. Au cours du mélange, on introduit l'hydroxyde de baryum solide sous forte agitation ; après quoi on obtient une mousse blanche.

Le tableau 4, place en fin de description, regroupe quelques propriété diélectriques pour différents échantillons de $Ba_{0,884}Ca_{0,116}Ti_{0,824}Zr_{0,176}O_3$ séchés en étuve à 150° C. La constante diélectrique et la tangente de l'angle de pertes ont été mesurées sous les mêmes conditions que précédemment. Les propriétés diélectriques sont données pour différentes températures de frittage (150°C/h, 2 heures de palier) et les mesures ont été effectuées sur des échantillons numérotés de XI à XIV et préparés sous la forme de condensateurs disques. Les figures 10 et 11 représentent l'évolution, en fonction de la température T, de la constante diélectrique ε et de la tangente de l'angle de pertes tg δ des échantillons XI à XIV.

Tableau 1

| Echantillon n° | Température frittage | ε | tg δ ($x10^{-4}$) |
|---|---|---|---|
| I | 1100°C | 3889 | 190 |
| II | 1150°C | 5466 | 290 |
| III | 1200°C | 4091 | 263 |
| IV | 1300°C | 3499 | 423 |

Tableau 2

| Echantillon n° | Température frittage | ε | tg δ ($x10^{-4}$) |
|---|---|---|---|
| V | 1150°C | 3107 | 347 |
| VI | 1200°C | 3773 | 529 |
| VII | 1400°C | 2687 | 422 |

Tableau 3

| Echantillon n° | Température frittage | ε | tg δ ($x10^{-4}$) |
|---|---|---|---|
| VIII | 1300°C | 3758 | 90 |
| IX | 1350°C | 9010 | 83 |
| X | 1400°C | 6810 | 60 |

Tableau 4

| Echantillon n° | Température frittage | ε | tg δ |
|---|---|---|---|
| XI | 1300°C | 2161 | 60 |
| XII | 1350°C | 3341 | 65 |
| XIII | 1400°C | 3124 | 71 |
| XIV | 1450°C | 4071 | 69 |

**Revendications**

1. Procédé de fabrication par voie chimique de matériau céramique appartenant au système- $Ba_xSr_{1-x}(Ti_uZr_vHf_w)O_3$
avec $O \leqq x \leqq 1$, les coefficients u, v et w pouvant être nuls mais au moins un ne l'étant pas, caractérisé en ce que le procédé comprend les étapes suivantes :
- préparation d'une solution alcoolique contenant au moins un alcoolate de titane, de zirconium ou d'hafnium,
- préparation d'un quantité déterminée d'hydroxyde hydraté de baryum et/ou d'hydroxyde hydraté de strontium à l'état solide,
- sous agitation violente, dissolution de l'hydroxyde ou des hydroxydes dans la solution alcoolique et déroulement de la réaction jusqu'à obtention d'une pâte,
- séchage de la pâte obtenue.

2. Procédé selon la revendication 1, caractérisé en ce que la solution alcoolique comprend également un ou plusieurs alcools correspondant à un alcoolate ou à des alcoolates de titane, de zirconium ou d'hafnium.

3. Procédé selon l'une des revendications 1 ou 2, caractérisé en ce que les alcoolates sont du type $Zr(OR)_4$, $Ti(OR)_4$ et $Hf(OR)_4$,
R représentant un groupe alkyle pouvant contenir de 1 à 5 atomes de carbone.

4. Procédé selon l'une quelconque des revendications 1 à 3, caractérisé en ce que le matériau céramique devant comprendre également au moins un substituant ou un dopant, celui-ci est introduit dans la solution alcoolique sous forme d'alcoolate ou sous forme de sel soluble dans la solution.

5. Procédé selon la revendication 4, caractérisé en ce que ledit sel soluble est un nitrate.

6. Procédé selon l'une quelconque des revendications 1 à 5, caractérisé en ce que le séchage est effectué soit par convection, soit par rayonnement, soit en autoclave pour réaliser un séchage hypercritique.

7. Matériau céramique obtenu par un procédé selon l'une quelconque des revendications précédentes, caractérisé en ce que : $0,95 \leqq u + v + w \leqq 1,05$.

8. Matériau céramique selon la revendication 7, caractérisé en ce qu'il comprend une substitution partielle ou totale des atomes de titane et/ou de zirconium et/ou d'hafnium.

9. Matériau céramique selon la revendication 8, caractérisé en ce que ladite substitution est effectuée soit par un mélange d'éléments M et M′ dans les proportions respectives 2/3 et 1/3, soit par un mélange d'éléments M et M″ dans les proportions respectives 3/4 et 1/4, M représentant au moins un métal choisi parmi le tantale et le niobium, M′ représentant au moins un métal choisi parmi le magnésium, le zinc et le manganèse et M″ représentant au moins un métal choisi parmi le lithium, le sodium et le potassium.

10. Matériau céramique selon l'une quelconque des revendications 7 à 9, caractérisé en ce qu'il comprend au moins un dopant constitué par du calcium, du magnésium, du zinc un ion de métal de transition : niobium, tantale, cuivre, manganèse, cobalt, un ion alcalin, du lanthane, de l'yttrium, de l'antimoine, du plomb.

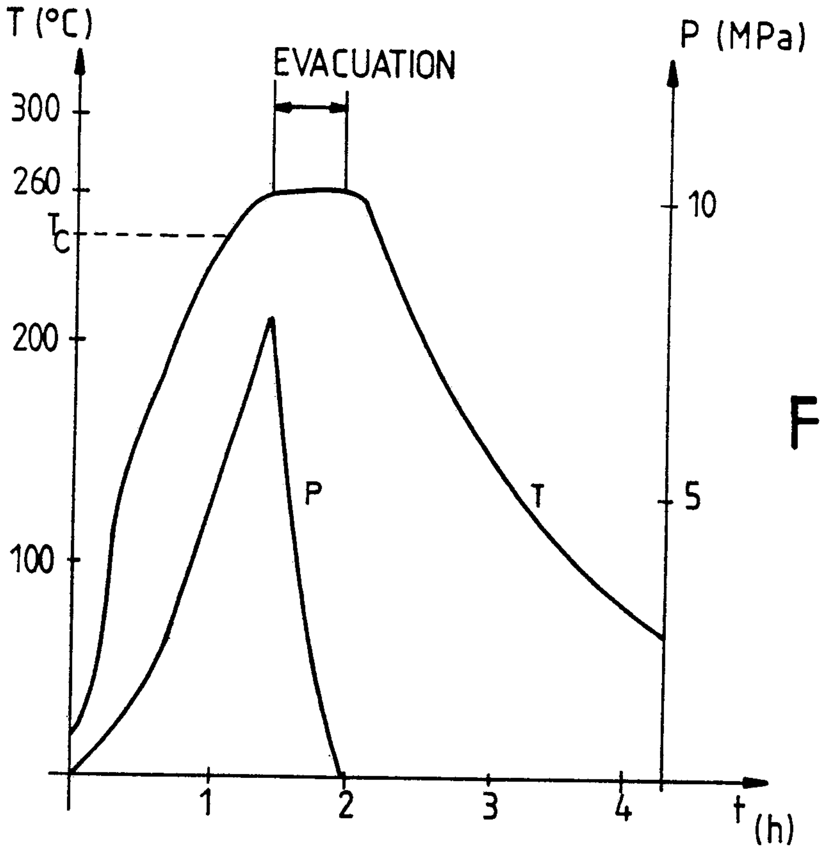
T (°C)
P (MPa)
EVACUATION
300
260
$T_C$
200
100
10
5
P
T
1
2
3
4
t (h)

FIG.1

FIG.2

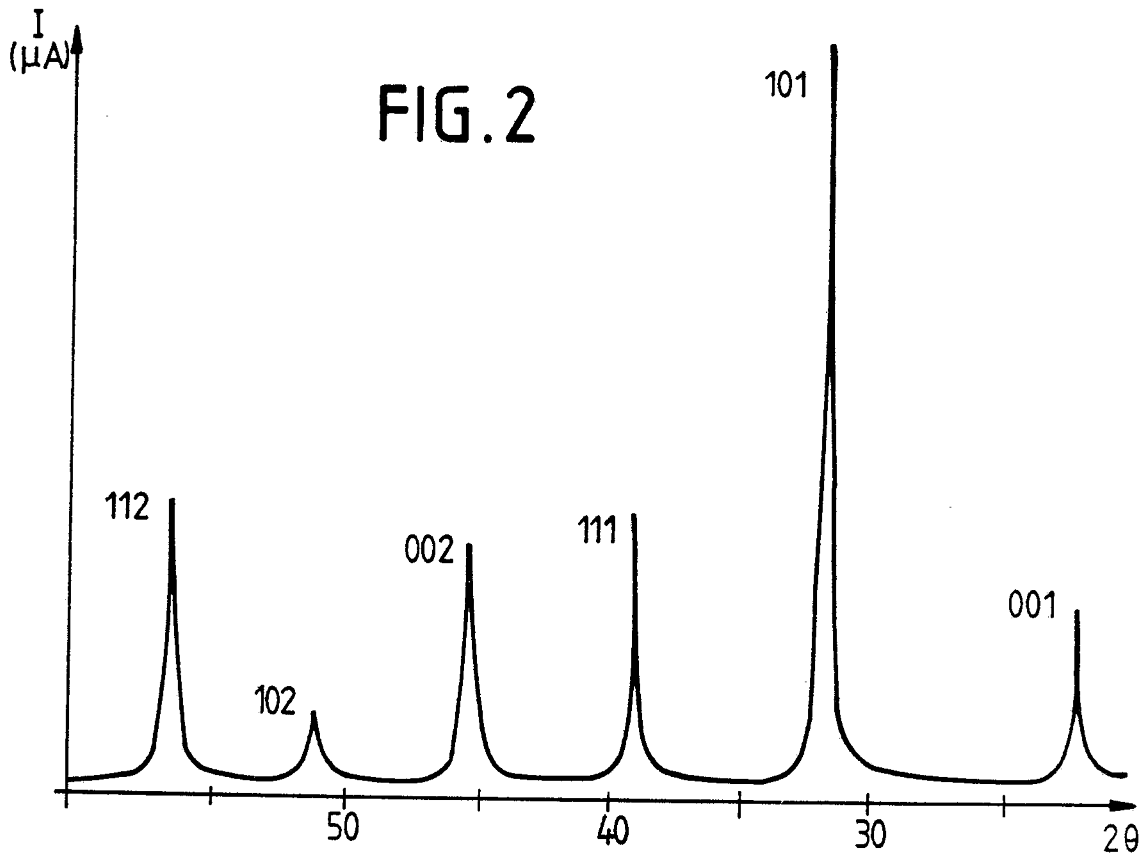
I (µA)
101
112
002
111
001
102
50
40
30
2θ

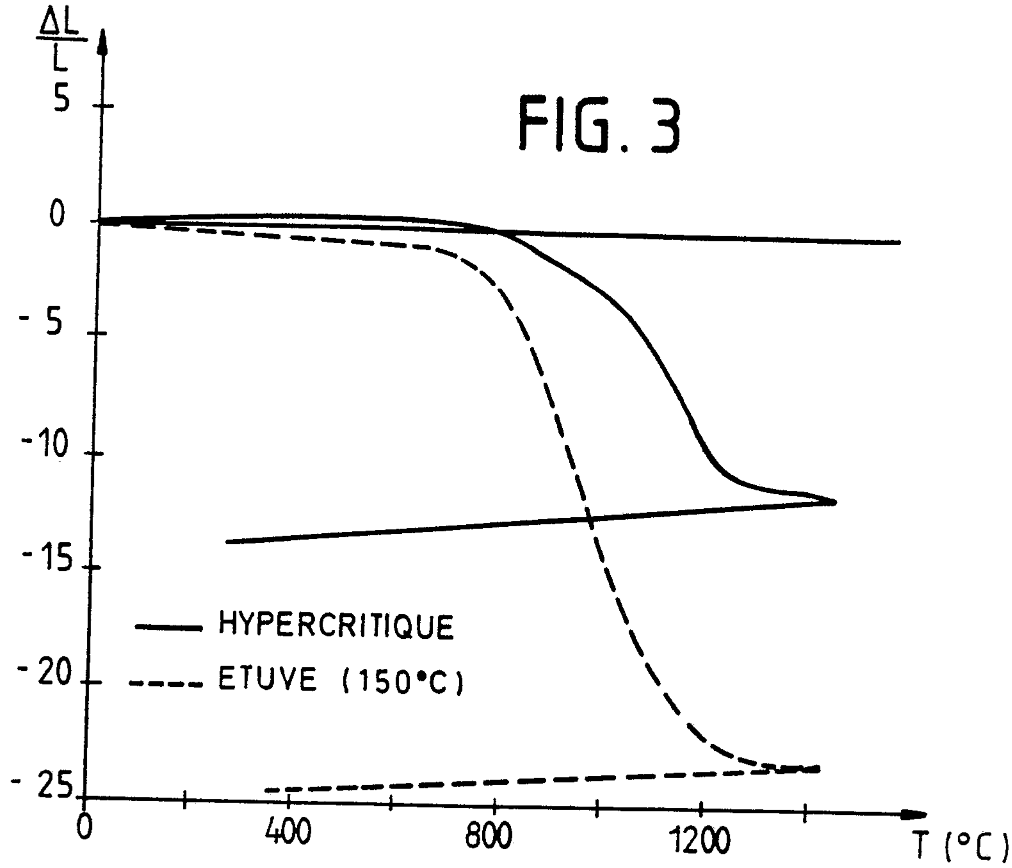
ΔL/L
5
0
- 5
-10
-15
-20
-25
0
400
800
1200
T (°C)
HYPERCRITIQUE
ETUVE (150°C)

FIG. 3

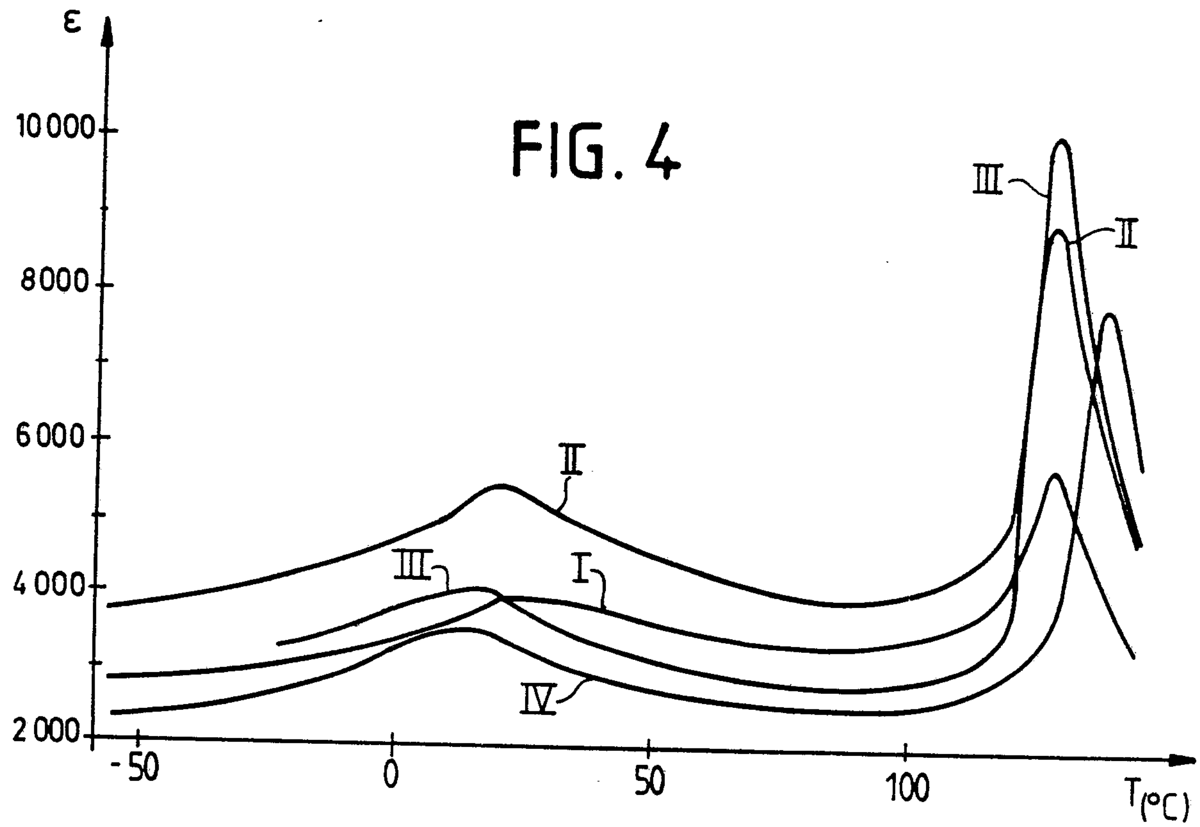
ε
10 000
8000
6000
4 000
2 000
-50
0
50
100
T(°C)
I
II
III
IV

FIG. 4

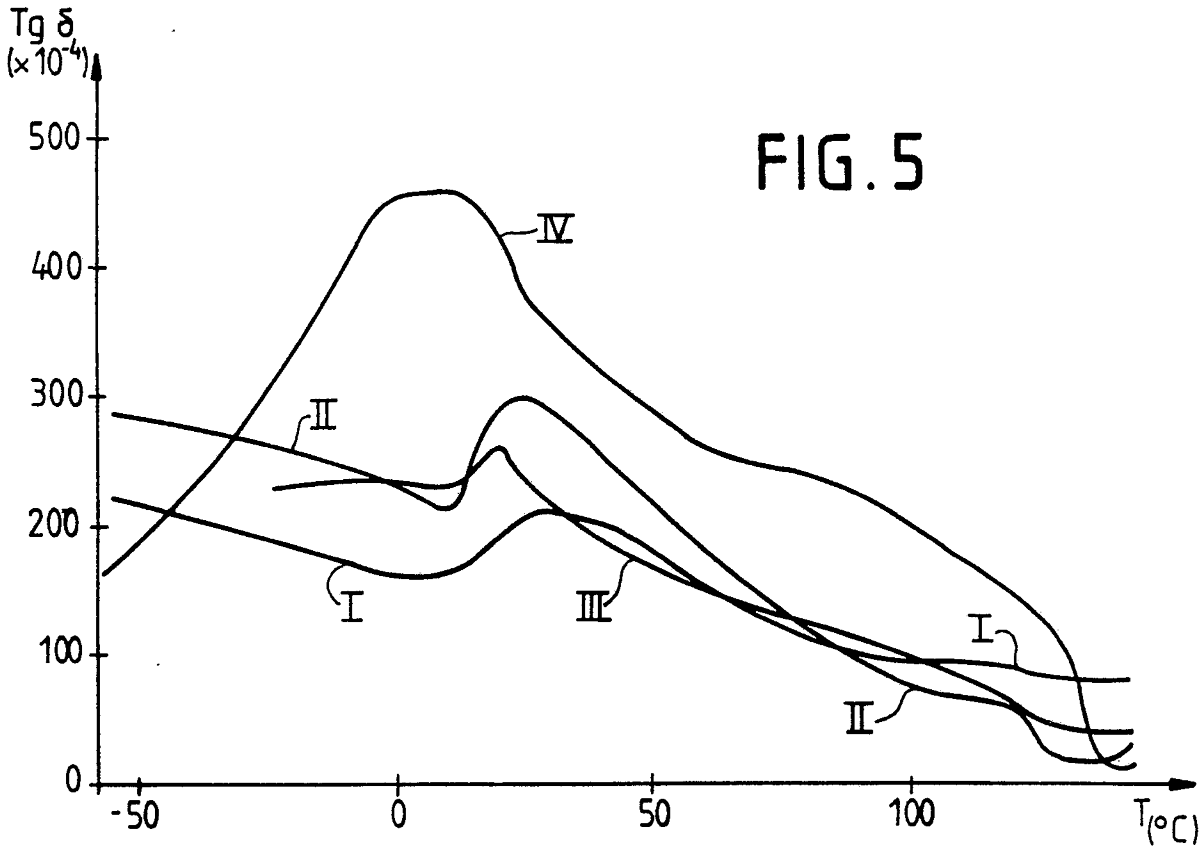
Tg δ
(× 10⁻⁴)
500
400
300
200
100
0
-50
0
50
100
T(°C)
I
II
III
IV

FIG. 5

FIG. 6

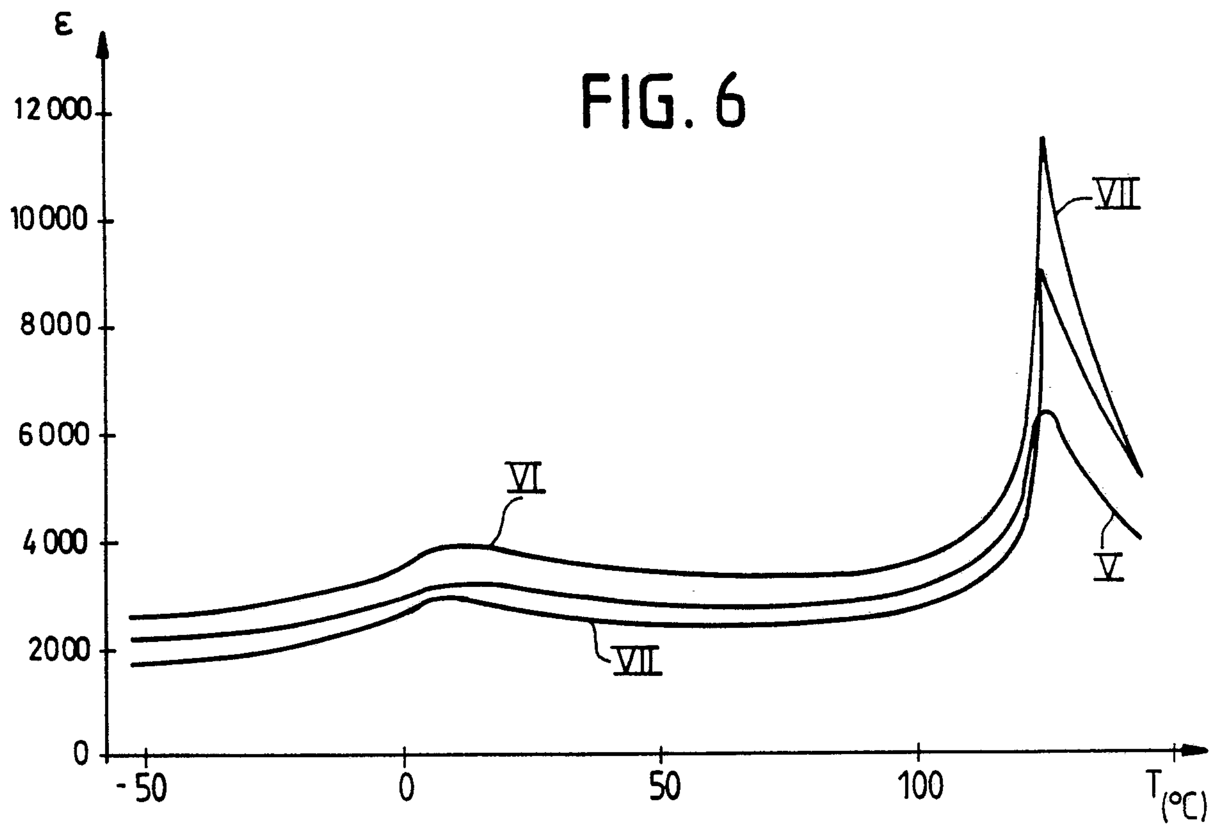
ε
12 000
10 000
8000
6000
4000
2000
0
-50
0
50
100
T(°C)
V
VI
VII

FIG. 7

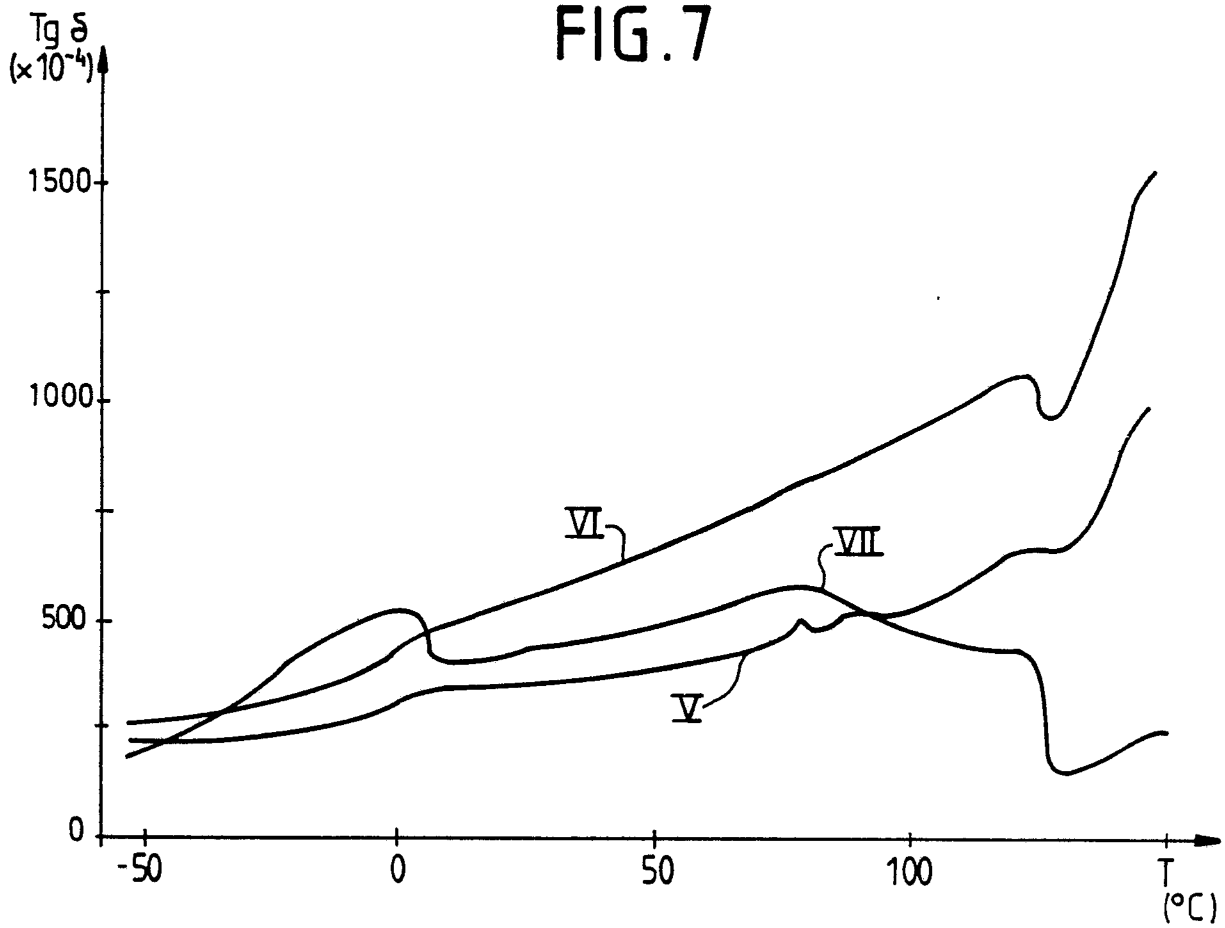

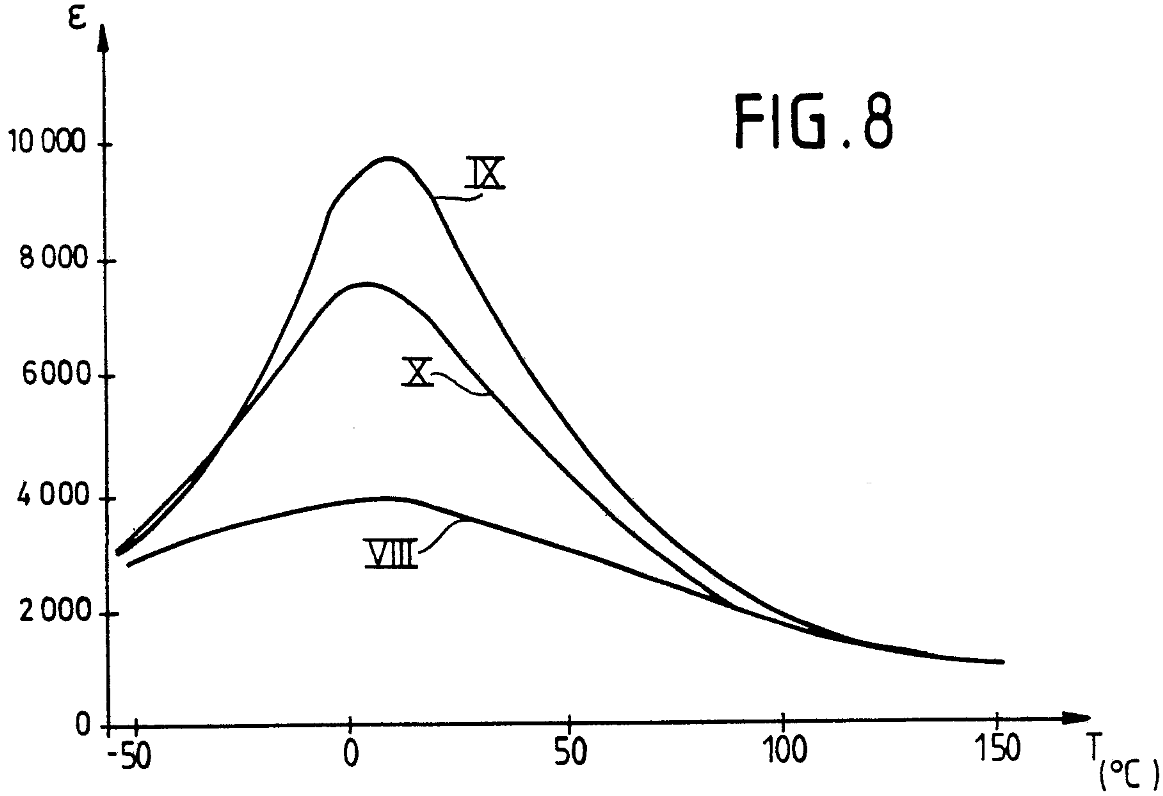
ε
10 000
8 000
6000
4 000
2 000
0
-50
0
50
100
150
T (°C)
IX
X
VIII

FIG. 8

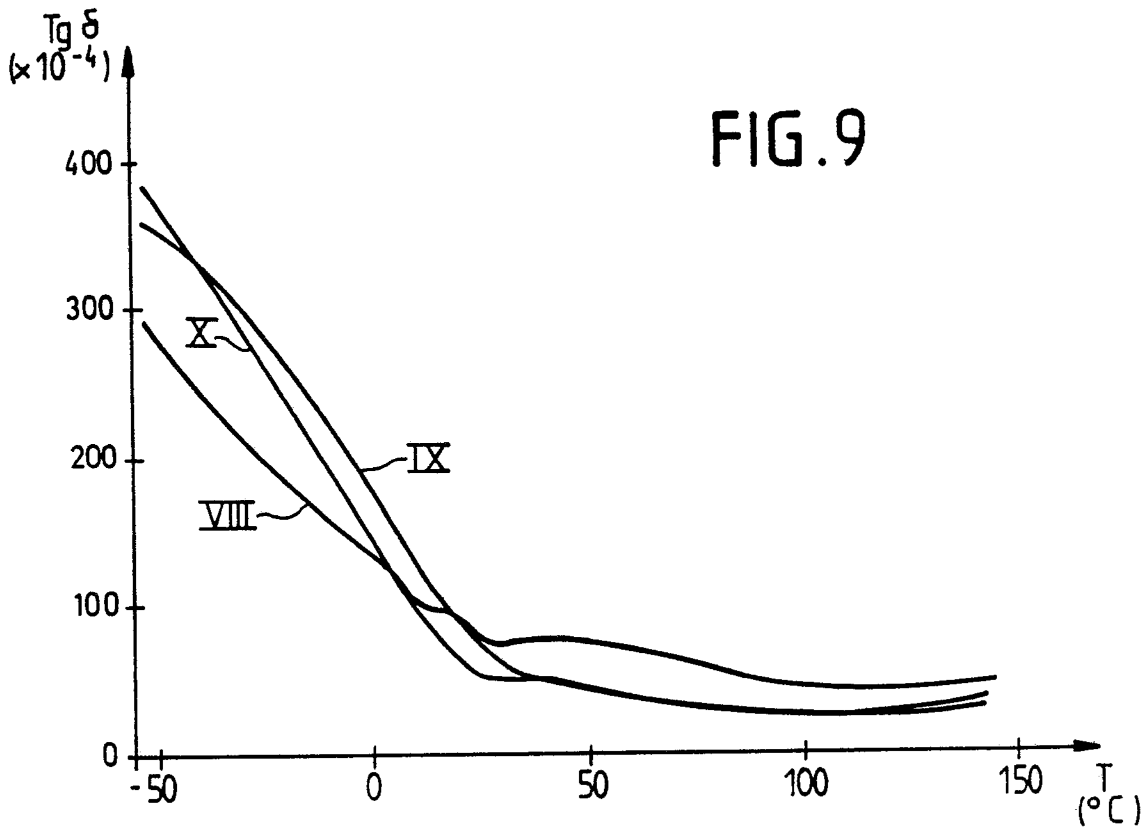
Tg δ (x 10⁻⁴)
400
300
200
100
0
-50
0
50
100
150
T (°C)
X
IX
VIII

FIG. 9

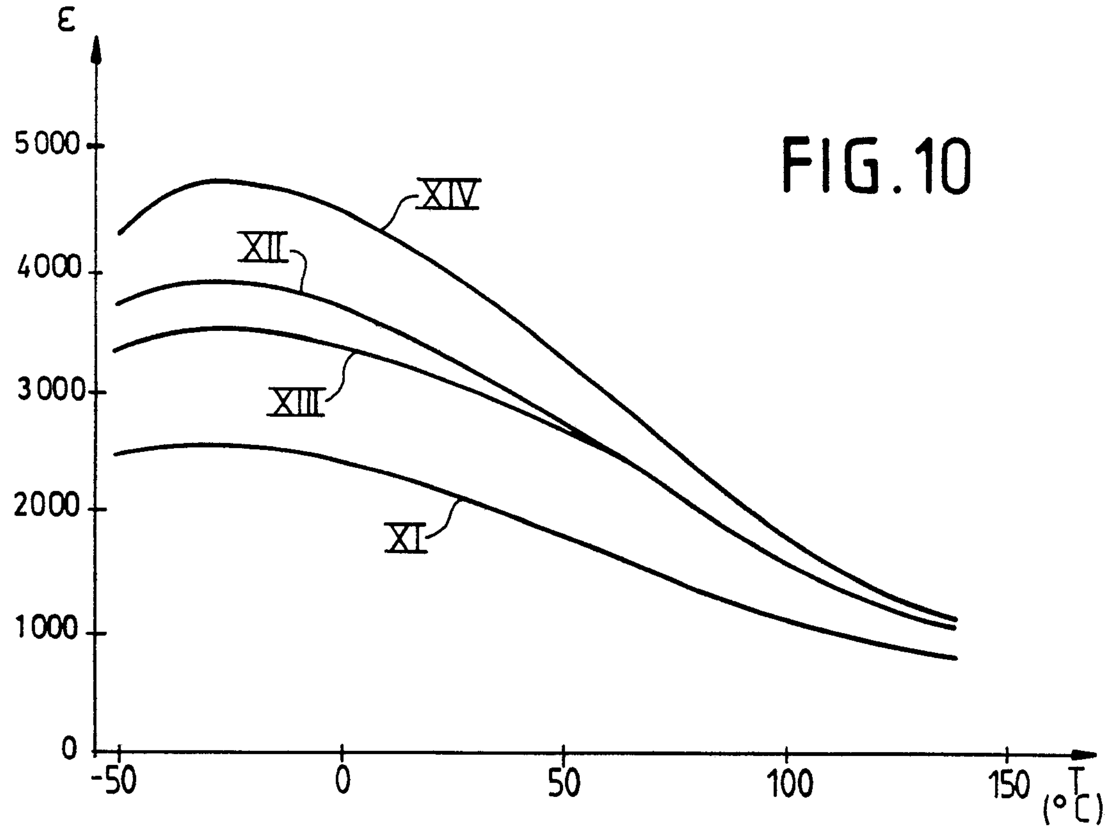
ε
5000
4000
3000
2000
1000
0
-50
0
50
100
150
T
(°C)
XIV
XII
XIII
XI

FIG.10

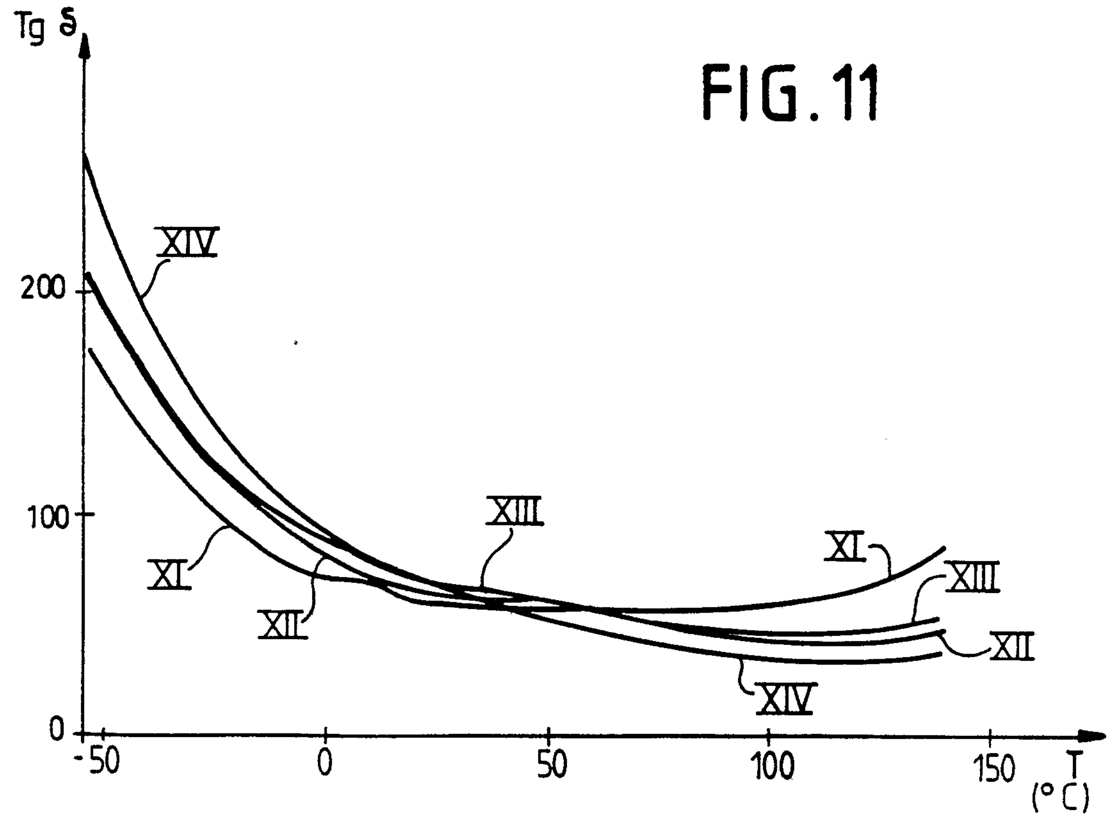
Tg δ
200
100
0
-50
0
50
100
150
T
(°C)
XIV
XIII
XI
XII
XIII
XII
XIV

FIG.11

Office européen des brevets

# RAPPORT DE RECHERCHE EUROPEENNE

Numero de la demande

EP 89 40 2390

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
| --- | --- | --- | --- |
| X | EP-A-0 079 392 (NIPPON SODA CO. LTD)<br>* Revendication 2; pages 13,24 * | 1-3,6,7 | C 01 G 23/00<br>C 01 G 25/00<br>C 01 G 27/00<br>C 04 B 35/00 |
| A | PATENT ABSTRACTS OF JAPAN, vol. 8, no. 41 (C-211)[1478], 22 février 1984, page 26 C 211; & JP-A-58 199 719 (MITSUBISHI KOGYO CEMENT K.K.) 21-11-1983 | 1 | |
| A | EP-A-0 250 085 (CORNING GLASS WORKS)<br>* Revendication 9 * | 1 | |
| D,A | US-A-3 292 994 (K. KISS et al.)<br>* En entier * | 1-3,7 | |
| D,A | JOURNAL OF THE AMERICAN CHEMICAL SOCIETY, vol. 77, 5 décembre 1955, page 6194; S.S. FLASCHEN: "An aqueous synthesis of barium titanate" | 1 | |
| A | FR-A-2 568 239 (SAKAI CHEM. IND. CO. LTD)<br>* Résumé * | 1 | |

| DOMAINES TECHNIQUES RECHERCHES (Int. Cl.5) |
| --- |
| C 01 G<br>C 04 B<br>C 07 F |

Le présent rapport a été établi pour toutes les revendications

| Lieu de la recherche | Date d'achèvement de la recherche | Examinateur |
| --- | --- | --- |
| LA HAYE | 08-12-1989 | LIBBERECHT-VERBEECK E.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)